# EUROPEAN PATENT APPLICATION

(11) **EP 4 171 118 A1**
(43) Date of publication of application: **26.04.2023**
(21) Application number: 21826352.3
(22) Date of filing: 30.04.2021
(51) Int. Cl.: H04W 36/00, H04W 36/08, H04W 36/30

(54) **METHOD AND DEVICE FOR COMMUNICATION**

(30) Priority: 19.06.2020 CN 202010567294
(71) Applicant: Spreadtrum Communications (Shanghai) Co., Ltd., Shanghai 201203 (CN)
(72) Inventor: LIU, Xing, Shanghai 201203 (CN)
(74) Representative: Pfenning, Meinig & Partner mbB
(86) International application number: PCT/CN2021/091760
(87) International publication number: WO 2021/254011

(57) **Abstract**

A communication method and an apparatus. The method includes: acquiring, by a relay device, handover conditions of a plurality of preset cells from a first cell, where for any cell i among the plurality of preset cells, a handover condition of the cell i is a handover condition for the relay device to perform handover from the first cell to the cell i; establishing, by the relay device, a connection with a second cell when the relay device meets a handover condition of the second cell, where the second cell is any one of the plurality of preset cells; sending, by the relay device, first indication information to a terminal device, where the first indication information indicates that the relay device establishes the connection with the second cell.

## Description

This application claims priority to Chinese Patent Application No. CN202010567294.1, filed to the China National Intellectual Property Administration on June 19, 2020 and entitled "COMMUNICATION METHOD AND APPARATUS", which is hereby incorporated by reference in its entirety.

### TECHNICAL FIELD

Embodiments of the present application relate to the field of communication technology and, in particular, to a communication method and an apparatus.

### BACKGROUND

In a wireless communication system, in order to expand transmission coverage, a relay device may be introduced between a terminal and a base station. The relay device can forward data from the terminal to the base station and forward data from the base station to the terminal.

Since the relay device is mobile, when a connection between the relay device and the terminal remains unchanged and relative movement occurs between the relay device and the base station, the relay device and the terminal need to perform group handover from one base station to another, while a connection relationship between the relay device and the terminal remains unchanged. When group handover is required, signals of the relay device and the base station are usually already poor. In order to avoid that the relay device cannot receive a handover command, a current solution is to use a conditional handover. That is, the handover command is sent to the relay device in advance, and the handover command includes multiple possible target base stations and corresponding handover conditions. The relay device does not perform a handover operation immediately, but only performs the handover when a handover condition is met.

The above solution can avoid the problem of handover failure due to the relay device not receiving the handover command. But since the triggering of the handover and the selection of the target base station are decided by the relay device, the terminal is unable to learn which target base station is finally selected.

### SUMMARY

Embodiments of the present application provide a communication method and an apparatus to overcome the problem that a terminal device is unable to learn which target cell is finally selected in a process of group handover.

In a first aspect, an embodiment of the present application provides a communication method, including:
acquiring, by a relay device, handover conditions of a plurality of preset cells from a first cell, where for any cell i of the plurality of preset cells, a handover condition of the cell i is a handover condition for the relay device to perform handover from the first cell to the cell i;
establishing, by the relay device, a connection with a second cell when the relay device meets a handover condition of the second cell, where the second cell is any one of the plurality of preset cells;
sending, by the relay device, first indication information to a terminal device, where the first indication information indicates that the relay device establishes the connection with the second cell.

In a possible implementation, the first indication information includes an identifier of the second cell.

In a possible implementation, acquiring, by the relay device, the handover conditions of the plurality of preset cells from the first cell includes:
acquiring, by the relay device, a radio resource control RRC message from the first cell, where the RRC message includes the handover conditions of the plurality of preset cells.

In a possible implementation, the RRC message further includes configuration information of each of the plurality of preset cells; and establishing, by the relay device, the connection with the second cell includes:
acquiring, by the relay device, configuration information of the second cell based on the RRC message;
establishing, by the relay device, the connection with the second cell based on the configuration information of the second cell.

In a possible implementation, before establishing, by the relay device, the connection with the second cell, the method further includes:
sending, the relay device, second indication information to the terminal device, where the second indication information indicates that the relay device starts to execute an operation of handover from the first cell to one of the plurality of preset cells.

In a possible implementation, the handover condition of the second cell is:
a signal strength between the relay device and the second cell is greater than or equal to a preset strength.

In a possible implementation, the method further includes:
receiving, by the relay device, data from the terminal device and sending the data to the second cell.

In a second aspect, an embodiment of the present application provides a communication method, including:
receiving, by a terminal device, first indication information from a relay device, where the first indication information indicates that the relay device performs handover from a first cell to a second cell and establishes a connection with the second cell;
sending, by the terminal device, data to the second cell through the relay device based on the first indication information.

In a possible implementation, the first indication information includes an identifier of the second cell.

In a possible implementation, before receiving, by the terminal device, the first indication information from the relay device, the method further includes:
receiving, by the terminal device, second indication information from the relay device, where the second indication information indicates that the relay device starts to execute an operation of handover from the first cell to one of a plurality of preset cells, where the second cell is one of the plurality of preset cells.

In a third aspect, an embodiment of the present application provides a communication method, including:
acquiring, by a relay device, handover conditions of a plurality of preset cells from a first cell, where for any cell i of the plurality of preset cells, a handover condition of the cell i is a handover condition for the relay device to perform handover from the first cell to the cell i;
sending, the relay device, second indication information to a terminal device when the relay device meets any one of the handover conditions of the plurality of preset cells, where the second indication information indicates that the relay device starts to execute an operation of handover from the first cell to one of the plurality of preset cells;
establishing, by the relay device, a connection with a second cell, where the second cell is one of the preset cells and the relay device meets a handover condition of the second cell.

In a possible implementation, acquiring, by the relay device, the handover conditions of the plurality of preset cells from the first cell includes:
acquiring, by the relay device, a radio resource control RRC message from the first cell, where the RRC message includes the handover conditions of the plurality of preset cells.

In a possible implementation, the RRC message further includes configuration information of each of the plurality of preset cells; and establishing, by the relay device, the connection with the second cell includes:
acquiring, by the relay device, configuration information of the second cell based on the RRC message;
establishing, by the relay device, the connection with the second cell based on the configuration information of the second cell.

In a possible implementation, the handover condition of the second cell is:
a signal strength between the relay device and the second cell is greater than or equal to a preset strength.

In a possible implementation, after establishing, by the relay device, the connection with the second cell, the method further includes:
sending, by the relay device, first indication information to the terminal device, where the first indication information indicates that the relay device establishes the connection with the second cell.

In a possible implementation, the first indication information includes an identifier of the second cell.

In a possible implementation, the method further includes:
receiving data from the terminal device and sending the data to the second cell.

In a fourth aspect, an embodiment of the present application provides a communication method, including:
receiving, by a terminal device, second indication information from a relay device, where the second indication information indicates that the relay device starts to execute an operation of handover from the first cell to one of a plurality of preset cells;
stopping, by the terminal device based on the second indication information, sending data to the first cell through the relay device.

In a possible implementation, the method further includes:
receiving, by the terminal device, first indication information from the relay device, where the first indication information indicates that the relay device performs handover from the first cell to a second cell and establishes a connection with the second cell, where the second cell is one of the plurality of preset cells;
sending, by the terminal device, data to the second cell through the relay device based on the first indication information.

In a possible implementation, the first indication information includes an identifier of the second cell.

In a fifth aspect, an embodiment of the present application provides a communication apparatus, including:
an acquiring module, configured to acquire handover conditions of a plurality of preset cells from a first cell, where for any cell i of the plurality of preset cells, a handover condition of the cell i is a handover condition for a relay device to perform handover from the first cell to the cell i;
a connecting module, configured for the relay device to establish a connection with a second cell when the relay device meets a handover condition of the second cell, where the second cell is any one of the plurality of preset cells;
a sending module, configured to send first indication information to a terminal device, where the first indication information indicates that the relay device establishes the connection with the second cell.

In a possible implementation, the first indication information includes an identifier of the second cell.

In a possible implementation, the acquiring module is specifically configured to:
acquire a radio resource control RRC message from the first cell, where the RRC message includes the handover conditions of the plurality of preset cells.

In a possible implementation, the RRC message further includes configuration information of each of the plurality of preset cells; and the connecting module is specifically configured to:
acquire configuration information of the second cell based on the RRC message;
establish the connection with the second cell based on the configuration information of the second cell.

In a possible implementation, the sending module is further configured to, before the relay device establishes the connection with the second cell:
send second indication information to the terminal device, where the second indication information indicates that the relay device starts to execute an operation of handover from the first cell to one of the plurality of preset cells.

In a possible implementation, the handover condition of the second cell is:
a signal strength between the relay device and the second cell is greater than or equal to a preset strength.

In a possible implementation, the acquiring module is further configured to:
receive data from the terminal device and send the data to the second cell.

In a sixth aspect, an embodiment of the present application provides a communication apparatus, including:
a receiving module, configured to receive first indication information from a relay device, where the indication information indicates that the relay device performs handover from a first cell to a second cell and establishes a connection with the second cell;
a sending module, configured to send data to the second cell through the relay device based on the first indication information.

In a possible implementation, the first indication information includes an identifier of the second cell.

In a possible implementation, the receiving module is further configured to, before a terminal device receives the first indication information from the relay device:
receive second indication information from the relay device, where the second indication information indicates that the relay device starts to execute an operation of handover from the first cell to one of a plurality of preset cells, where the second cell is one of the plurality of preset cells.

In a seventh aspect, an embodiment of the present application provides a communication apparatus, including:
an acquiring module, configured to acquire handover conditions of a plurality of preset cells from a first cell, where for any cell i of the plurality of preset cells, a handover condition of the cell i is a handover condition for a relay device to perform handover from the first cell to the cell i;
a sending module, configured for the relay device to send second indication information to a terminal device when the relay device meets any one of the handover conditions of the plurality of preset cells, where the second indication information indicates that the relay device starts to execute an operation of handover from the first cell to one of the plurality of preset cells;
a connecting module, configured for the relay device to establish a connection with a second cell, where the second cell is one of the preset cells and the relay device meets a handover condition of the second cell.

In a possible implementation, the acquiring module is specifically configured to:
acquire a radio resource control RRC message from the first cell, where the RRC message includes the handover conditions of the plurality of preset cells.

In a possible implementation, the RRC message further includes configuration information of each of the plurality of preset cells; and the connecting module is specifically configured to:
acquire configuration information of the second cell based on the RRC message;
establish the connection with the second cell based on the configuration information of the second cell.

In a possible implementation, the handover condition of the second cell is:
a signal strength between the relay device and the second cell is greater than or equal to a preset strength.

In a possible implementation, the sending module is further configured to, after the relay device establishes the connection with the second cell:
send first indication information to the terminal device, where the first indication information indicates that the relay device establishes the connection with the second cell.

In a possible implementation, the first indication information includes an identifier of the second cell.

In a possible implementation, the acquiring module is further configured to:
receive data from the terminal device and send the data to the second cell.

In an eighth aspect, an embodiment of the present application provides a communication apparatus, including:
a receiving module, configured to receive second indication information from a relay device, where the second indication information indicates that the relay device starts to execute an operation of handover from the first cell to one of a plurality of preset cells;
a processing module, configured to stop, based on the second indication information, sending data to the first cell through the relay device.

In a possible implementation, the receiving module is further configured to:
receive first indication information from the relay device, where the first indication information indicates that the relay device performs handover from the first cell to a second cell and establishes a connection with the second cell, where the second cell is one of the plurality of preset cells;
send, by the terminal device, data to the second cell through the relay device based on the first indication information.

In a possible implementation, the first indication information includes an identifier of the second cell.

In a ninth aspect, an embodiment of the present disclosure provides a relay device, including: at least one processor and a memory;
where the memory stores computer-execution instructions;
the at least one processor executes the computer-execution instructions stored in the memory to cause the at least one processor to execute the communication method according to any one of the first aspect, or, cause the at least one processor to execute the communication method according to any one of the third aspect.

In a tenth aspect, an embodiment of the present disclosure provides a terminal device, including: at least one processor and a memory;
where the memory stores computer-execution instructions;
the at least one processor executes the computer-execution instructions stored in the memory to cause the at least one processor to execute the communication method according to any one of the second aspect, or, cause the at least one processor to execute the communication method according to any one of the fourth aspect.

In an eleventh aspect, an embodiment of the present disclosure provides a computer-readable storage medium, where the computer-readable storage medium stores computer-execution instructions, and the communication method according to any one of the first aspect to the fourth aspect is implemented when a processor executes the computer-execution instructions.

According to the communication method and apparatus provided by embodiments of the present application, firstly, a relay device acquires handover conditions of a plurality of preset cells from a first cell, where for any cell i of the plurality of preset cells, a handover condition of the cell i is a handover condition for the relay device to perform handover from the first cell to the cell i; when the relay device meets a handover condition of a second cell, the relay device establishes a connection with the second cell, where the second cell is any one of the plurality of preset cells; finally, the relay device sends first indication information to the terminal device to indicate that the relay device establishes the connection with the second cell. In the solution of the embodiments of the present application, after the relay device establishes the connection with the second cell, the relay device informs, through the first indication information, the terminal device that the connection with the second cell has been established, so that the terminal device can learn the timing of the completion of handover of the relay device and know the target cell selected for the handover, thereby enabling the terminal device to interact with the second cell after the handover through the relay device.

### BRIEF DESCRIPTION OF DRAWINGS

In order to explain technical solutions of embodiments of the present invention or in the prior art more clearly, the accompanying drawings that need to be used in the description of the embodiments or the prior art will be briefly introduced in the following. Obviously, the drawings in the following description are some embodiments of the present invention, and for those of ordinary skilled in the art, other drawings can also be obtained according to these drawings without paying creative effort.
FIG. 1 is a schematic diagram of an uplink, a downlink and a sidelink provided by an embodiment of the present application.
FIG. 2 is a schematic diagram of a link connection of a relay provided by an embodiment of the present application.
FIG. 3 is a schematic diagram of group handover provided by an embodiment of the present application.
FIG. 4 is a schematic diagram of group handover of a relay device provided in the prior art.
FIG. 5 is a schematic flow diagram of a communication method provided by an embodiment of the present application.
FIG. 6 is a signaling diagram of a communication method provided by an embodiment of the present application.
FIG. 7 is a schematic flow diagram of a communication method provided by another embodiment of the present application.
FIG. 8 is a schematic flow diagram of a communication method provided by another embodiment of the present application.
FIG. 9 is a schematic flow diagram of a communication method provided by another embodiment of the present application.
FIG. 10 is a schematic structural diagram of a communication apparatus provided by an embodiment of the present application.
FIG. 11 is a schematic structural diagram of a communication apparatus provided by an embodiment of the present application.
FIG. 12 is a schematic structural diagram of a communication apparatus provided by an embodiment of the present application.
FIG. 13 is a schematic structural diagram of a communication apparatus provided by an embodiment of the present application.
FIG. 14 is a schematic diagram of a hardware structure of a relay device provided by an embodiment of the present application.
FIG. 15 is a schematic diagram of a hardware structure of a terminal device provided by an embodiment of the present application.

### DESCRIPTION OF EMBODIMENTS

In order to make the objections, technical solutions and advantages of embodiments of the present application clearer, the technical solutions in the embodiments of the present application will be described clearly and comprehensively with reference to the drawings in the embodiments of the present application. Obviously, the described embodiments are part of the embodiments of the present application, rather than all of them. Based on the embodiments in the present application, all other embodiments obtained by those of ordinary skilled in the art without creative effort belong to the protection scope of the present application.

To facilitate understanding, first of all, the concepts involved in the present application are explained.

Terminal device: usually having a wireless transceiving function. A terminal device may be deployed on land, including indoor or outdoor, handheld, wearable or vehicle-mounted; may also be deployed on water surface (for example, on a ship, etc.); may also be deployed in air (for example, on an airplane, a balloon, and a satellite, etc.). The terminal device may be a mobile phone (mobile phone), a tablet computer (Pad), a computer having a wireless transceiving function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a remote medical (remote medical) wireless terminal device, a wireless terminal device in a smart grid (smart grid), a wireless terminal device in transportation safety (transportation safety), a wireless terminal device in a smart city (smart city), a wireless terminal device in a smart home, a wearable terminal device, etc. The terminal device involved in the embodiments of the present application may also be referred to as a terminal, user equipment (user equipment, UE), an access terminal device, a vehicle-mounted terminal, an industrial control terminal, a UE unit, a UE station, a mobile station, a mobile radio station, a remote station, a remote terminal device, a mobile device, a UE terminal device, a wireless communication device, a UE agent, or a UE apparatus, etc. The terminal device may also be fixed or mobile..

RRC: radio resource control, radio resource control.

CHO: conditional handover, conditional handover. That is, a handover command will be sent in advance to a device that needs to perform cell handover, and the handover command includes configuration information of a plurality of possible cells and respective handover conditions. The device does not perform a handover operation immediately, but waits for a condition to be met before performing the handover operation.

Relay device: also being referred to as a relay (relay), and being a transmission channel between two switching centers. In the present application, in order to expand transmission coverage, a relay device can be introduced between a sending end and a receiving end. The relay device can forward received data to the receiving end, thus expanding the sending coverage of the sending end.

For example, in a cellular system, a relay device may be introduced between a base station and a terminal device. The relay device is responsible for forwarding data of the terminal device to the base station, or forwarding data of the base station to the terminal device.

Sidelink (Sidelink, SL) communication technology, also referred to as object-to-object direct communication technology, is a communication technology that is not quite the same as ordinary wireless cellular network communication. In a traditional cellular network, a terminal device communicates with a network device, at which time a link between the terminal device and the network device is called an uplink (Uplink) or a downlink (Downlink), and an interface is called a Uu interface. In object-to-object direct communication, a terminal device communicates with a terminal device directly. A link between the terminal devices is called a direct link, and an interface is called a PC5 interface. A sidelink may also be called a direct link.

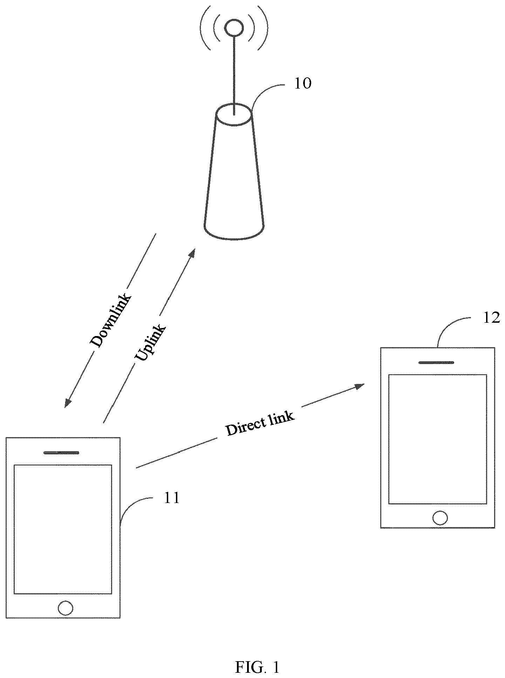

FIG. 1 is a schematic diagram of an uplink, a downlink and a sidelink provided by an embodiment of the present application. As shown in FIG. 1, a base station 10, a terminal 11 and a terminal 12 are included. An uplink and a downlink exist between the base station 10 and the terminal 11. The base station 10 can send downlink data to the terminal 11 through the downlink, and the terminal 11 can send uplink data to the base station 10 through the uplink.

Between the terminal 11 and the terminal 12 exists a direct link through which the terminal 11 can send data to the terminal 12 and the terminal 12 can send data to the terminal 11.

The sidelink was initially introduced to realize that terminal devices closer to each other can communicate directly, and data does not need to be forwarded through a base station, thereby reducing transmission delay. Later, based on the introduction of the sidelink, a sidelink relay (sidelink relay) was designed. The previous relay uses the technology of the uplink and the downlink for communication between the relay and the terminal device, while the sidelink relay uses the sidelink technology for the link between the relay device and the terminal device..

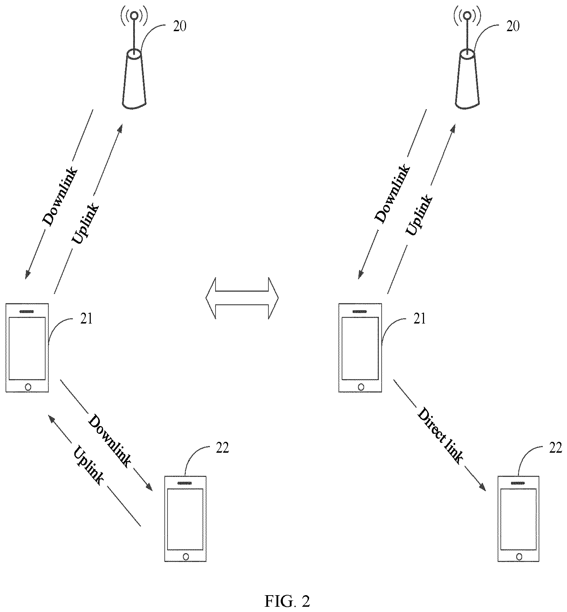

FIG. 2 is a schematic diagram of a link connection of a relay provided by an embodiment of the present application. As shown in FIG. 2, a base station 20, a relay device 21 and terminal device 22 are included.

The technology of the uplink and the downlink is used for communication between the relay device 21 and the base station 20. The base station 20 can send downlink data to the relay device 21 through the downlink, and the relay device 21 can send uplink data to the base station 20 through the uplink.

On the left part of FIG. 2, the technology of the uplink and the downlink is also used for communication between the relay device 21 and the terminal device 22. The relay device 21 can send downlink data sent by the base station 20 to the terminal device 22 through the downlink. The terminal device 22 can send uplink data to the relay device 22 through the uplink and the relay device 22 forwards the data to the base station 20.

On the right part of FIG. 2, the technology of the direct link is used for communication between the relay device 21 and the terminal device 22, and data transmission is carried out directly.

In a wireless communication system, when a base station is directly connected with a terminal device, since the terminal device is mobile, the terminal device may move from a coverage area of one base station to a coverage area of another base station, at which point the terminal device needs to perform handover. Similarly, for a relay device, the relay device is also mobile. When a connection between the relay device and the terminal device remains unchanged, but movement occurs between the relay device and a base station or cell, a phenomenon known as group handover (group handover) occurs. That is, both the relay device and the terminal device perform handover from one base station to another, or both the relay device and the terminal device perform handover from one cell to another, while the connected relationship between the relay device and the terminal device remains unchanged.

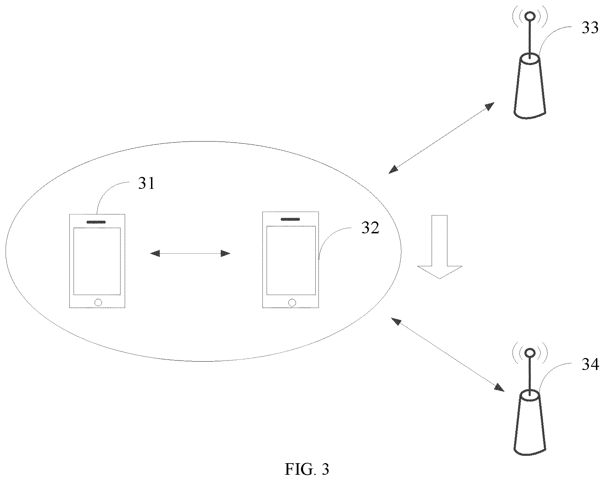

FIG. 3 is a schematic diagram of group handover provided by an embodiment of the present application. As shown in FIG. 3, a terminal device 31, a relay device 32, a base station 33 and a base station 34 are included. The connection between the terminal device 31 and the relay device 32 remains unchanged. When the terminal device 31 and the relay device 32 move, handover from the base station 33 to the base station 34 occurs, i.e. group handover occurs.

In a communication system including only a base station and a terminal device, a source base station sends a handover command to the terminal device when handover is required. After the terminal device receives the handover command, the terminal device will immediately start to execute a handover operation. However, when the terminal device needs to perform handover, it generally occurs when signals between the terminal device and the source base station are already poor, so it may happen that the handover command sent by the source base station cannot be received by the terminal device successfully. The handover cannot be performed at this time. If the handover command is sent to the terminal device in advance when the signals between the terminal device and the source base station are relatively good, it may cause the terminal device to perform the handover prematurely.

Therefore, during the 5G research, 3GPP introduced a solution of conditional handover. The source base station will send a handover command to the terminal device in advance. The handover command includes configuration information of multiple possible target base stations and a respective handover condition of each target base station. After receiving the handover command, the terminal device does not perform a handover operation immediately, but determines whether it meets a handover condition. Only when a handover condition corresponding to a certain target base station is met, the handover is executed.

For example, the handover command includes five cells, namely, cell 1 to cell 5. After the terminal device receives the handover command, the terminal device continuously monitors the signal strength of these five cells. When the signal strength of cell 3 is greater than a preset threshold (at this time, the handover condition of cell 3 is that the signal strength of cell 3 is greater than the preset threshold), and the signal strength of the current cell is lower than the preset threshold, an operation of handover to cell 3 is executed.

In the group handover of the relay device, when the relay device and the terminal device perform handover from one cell to another together, the same way of conditional handover can be adopted. The relay device receives configuration information of multiple target cells and their respective handover conditions, and selects a target cell to complete handover only when the relay device meets a handover condition.

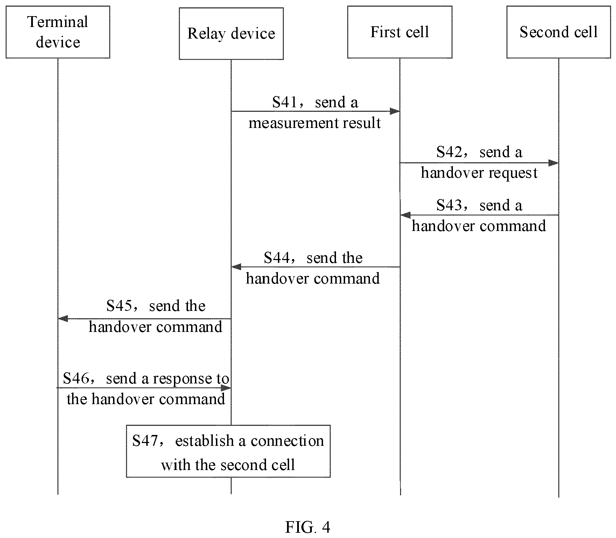

FIG. 4 is a schematic diagram of group handover of a relay device provided in the prior art. As shown in FIG. 4, the following steps are included.

S41, a relay device sends a measurement result to a first cell.

S42, the first cell sends a handover request to a second cell.

S43, the second cell sends a handover command to the first cell.

The second cell will send the handover command to the first cell after allowing the relay device to perform handover to the second cell.

S44, the first cell sends the handover command to the relay device.

S45, the relay device sends the handover command to the terminal device.

S46, the terminal device sends a response to the handover command to the relay device.

S47, the relay device establishes a connection with the second cell.

For example, the connection with the second cell can be established through random access.

In the current group handover process, since a handover condition is generally that the signal strength between the relay device and a potential target cell meets a certain threshold, the final triggering of the handover and the selection of the target cell are decided by the relay device. For the terminal device, it does not know when the cell handover is triggered or which target cell is selected for the handover. Therefore, embodiments of the present application provides a solution to enable the terminal device to learn the triggering of cell handover and the selected target cell. This will be described below.

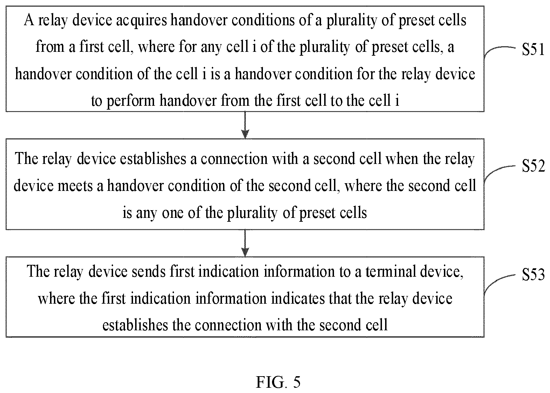

FIG. 5 is a schematic flow diagram of a communication method provided by an embodiment of the present application. As shown in FIG.5, the method includes the following steps.

S51, , a relay device acquires handover conditions of a plurality of preset cells from a first cell, where for any cell i of the plurality of preset cells, a handover condition of the cell i is a handover condition for the relay device to perform handover from the first cell to the cell i.

In the embodiment of the present application, the relay device is initially connected to the first cell. Data transmission can be performed between a terminal device and the first cell through the relay device. The relay device and the terminal device are kept within a certain distance from each other so that the connection between the relay device and the terminal device can be maintained without handover.

After the terminal device and the relay device move, cell handover may be required. For example, when the terminal device and the relay device have moved out of the coverage area of the first cell, the terminal device and the relay device need to perform handover to another cell, i.e. a second cell. At this time, a connection relationship between the terminal device and the relay device remains unchanged, and both the relay device and the terminal device need to perform handover from the first cell to the second cell, i.e., to perform group handover.

Before the relay device needs to perform cell handover, the first cell will send the handover conditions of the plurality of preset cells to the relay device. After the relay device meets a handover condition of any cell i of the plurality of preset cells, the relay device performs handover from the first cell to that cell i.

S52, the relay device establishes a connection with a second cell when the relay device meets a handover condition of the second cell, where the second cell is any one of the plurality of preset cells.

The second cell is one of the preset cells and the relay device meets the handover condition of the second cell. Then the relay device will perform handover from the first cell to the second cell. After the relay device starts to perform the cell handover, the relay device will disconnect from the first cell and try to establish a connection with the second cell.

S53, the relay device sends first indication information to the terminal device, where the first indication information indicates that the relay device establishes the connection with the second cell.

After the relay device establishes the connection with the second cell successfully, the relay device will send the first indication information to the terminal device to indicate that the relay device establishes the connection with the second cell successfully. After receiving the first indication information, the terminal device can learn from the first indication information that the relay device has performed the handover to the second cell. At this time, the terminal device may stop communicating with the first cell through the relay device and may start to communicate with the second cell through the relay device.

According to the communication method provided by the embodiment of the present application, firstly, the relay device acquires the handover conditions of the plurality of preset cells from the first cell, where for any cell i of the plurality of preset cells, the handover condition of the cell i is the handover condition for the relay device to perform handover from the first cell to the cell i; when the relay device meets the handover condition of the second cell, the relay device establishes the connection with the second cell, where the second cell is any one of the plurality of preset cells; finally, the relay device sends the first indication information to the terminal device to indicate that the relay device establishes the connection with the second cell. In the solution of the embodiment of the present application, after the relay device establishes the connection with the second cell, the relay device informs, through the first indication information, the terminal device that the connection with the second cell has been established, so that the terminal device can learn the timing of the completion of the handover of the relay device and know the target cell selected for the handover, thereby enabling the terminal device to interact with the second cell after the handover through the relay device.

The solution of the present application will be described in detail below in conjunction with the accompanying drawings.

When a relay device and a terminal device need to perform cell handover due to a change in location or other reasons, the relay device needs to receive a handover command from a first cell. When the relay device needs to perform handover from the first cell to a second cell, the first cell sends a handover request to the second cell. If the second cell allows the handover of the relay device, the second cell will send a handover command to the first cell, and the first cell will send the handover command to the relay device.

Optionally, the first indication information includes an identifier of the second cell. After receiving the first indication information, the terminal device can learn from the identifier of the second cell included in the first indication information that the relay device performs the handover from the first cell to the second cell.

Optionally, the relay device may acquire an RRC message from the first cell, where the RRC message includes handover conditions of a plurality of preset cells.

Optionally, the RRC message further includes configuration information of each of the plurality of preset cells. Through the RRC message, the relay device can acquire configuration information of the second cell and establish a connection with the second cell based on the configuration information of the second cell.

Optionally, a handover condition of the second cell is that a signal strength between the relay device and the second cell is greater than or equal to a preset strength. For any cell i of the plurality of preset cells, a handover condition of the cell i is that a signal strength between the relay device and the cell i is greater than or equal to a certain signal strength, and the signal strength corresponding to different cells may be the same or different.

Optionally, before the relay device establishes the connection with the second cell, the relay device may also send second indication information to the terminal device to indicate that the relay device starts to execute an operation of handover from the first cell to one of the plurality of preset cells.

After the relay device acquires the handover conditions of the plurality of preset cells from the first cell, the terminal device does not know at this time when the relay device is ready to perform cell handover, nor which cell is selected. The first indication information is sent from the relay device to the terminal device after the successful establishment of the connection between the relay device and the second cell. Before that, the relay device is informed through the second indication information that a cell handover operation will begin, that is, the second indication message indicates that the relay device starts to execute the operation of handover from the first cell to one of the plurality of preset cells. Based on the second indication information, the terminal device stops communicating with the first cell through the relay device, and stops sending data for the first cell to the first cell through the relay device.

The second indication information simply informs the relay device that the cell handover operation is about to be performed, but will not include an identifier of a target cell that the relay device is to perform handover to. This is because that after meeting the handover condition of a certain cell i, the relay device tries to connect with the cell i, but there is a possibility that the connection fails. In this case, the relay device will select a cell meeting the condition among other cells and try to establish a connection again. After the relay device establishes the connection with the second cell successfully, the relay device will inform the terminal device through the first indication information that the target cell of the handover is the second cell.

After receiving the first indication information, the terminal device may send data to the second cell through the relay device based on the first indication information.

The solution of the present application will be described in detail below in conjunction with the accompanying drawings.

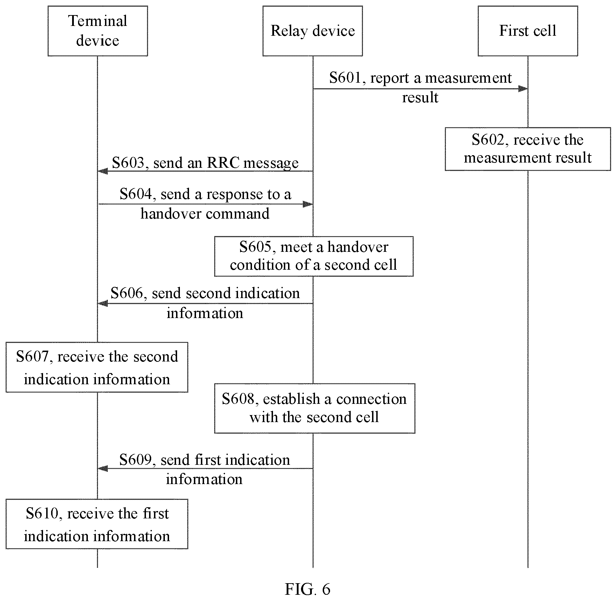

FIG. 6 is a signaling diagram of a communication method provided by an embodiment of the present application. As shown in FIG. 6, the following steps are included.

S601, a relay device reports a measurement result to a first cell.

The relay device can acquire measurement results of one or more nearby cells and report them to the first cell.

S602, the first cell receives the measurement result.

After the relay device reports the measurement result to the first cell, the first cell receives the measurement result and determines a plurality of preset cells, configuration information of each preset cell and various handover conditions based on the received measurement result.

S603, the relay device sends an RRC message (i.e. a handover command) to a terminal device.

The RRC message includes handover conditions of a plurality of preset cells and configuration information of the plurality of preset cells.

After receiving the RRC message, the terminal device can learn the handover conditions of the plurality of preset cells and the configuration information of the plurality of preset cells.

S604, the terminal device sends a response to the handover command to the relay device.

S605, the relay device determines that a handover condition of a second cell is met.

S606, the relay device sends second indication information to the terminal device.

S607, the terminal device receives the second indication information.

The second indication information indicates that the relay device starts to execute an operation of handover from the first cell to one of the plurality of preset cells. At this time, the terminal device does not yet know which cell the relay device has selected as the target cell, but can learn that the relay device has disconnected from the first cell and starts to try to access another cell. Therefore, after receiving the second indication information, the terminal device may stop sending data for the first cell to the relay device and stop communicating with the first cell through the relay device.

S608, the relay device establishes a connection with the second cell.

S609, the relay device sends first indication information to the terminal device.

S610, the terminal device receives the first indication information.

The first indication information includes an identifier of the second cell, and the terminal device can learn from the first indication information that the relay device has completed the cell handover and has been handed over to the second cell.

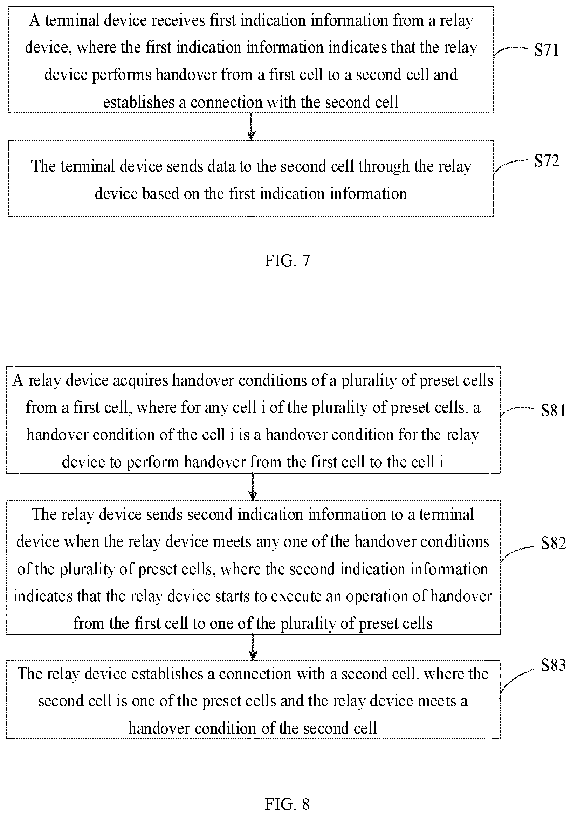

FIG. 7 is a schematic flow diagram of a communication method provided by another embodiment of the present application. As shown in FIG.7, the following steps are included.

S71, a terminal device receives first indication information from a relay device, where the first indication information indicates that the relay device performs handover from a first cell to a second cell and establishes a connection with the second cell.

S72, the terminal device sends data to the second cell through the relay device based on the first indication information.

In a possible implementation, the first indication information includes an identifier of the second cell.

In a possible implementation, before the terminal device receives the first indication information from the relay device, the method further includes that:
the terminal device receives second indication information from the relay device, where the second indication information indicates that the relay device starts to execute an operation of handover from the first cell to one of a plurality of preset cells, where the second cell is one of the plurality of preset cells.

The solution of the embodiment shown in FIG. 7 is the method of the terminal device side corresponding to the solutions shown in FIG. 5-FIG. 6. The steps and principles thereof have been introduced in the above embodiments. The specific implementation can be found in the above embodiments, and will not be repeated here.

FIG. 8 is a schematic flow diagram of a communication method provided by another embodiment of the present application. As shown in FIG.8, the following steps are included.

S81, a relay device acquires handover conditions of a plurality of preset cells from a first cell, where for any cell i of the plurality of preset cells, a handover condition of the cell i is a handover condition for the relay device to perform handover from the first cell to the cell i.

In the embodiment of the present application, the relay device is initially connected to the first cell. Data transmission can be performed between a terminal device and the first cell through the relay device. The relay device and the terminal device are kept within a certain distance from each other so that the connection between the relay device and the terminal device can be maintained without handover.

After the terminal device and the relay device move, cell handover may be required. For example, when the terminal device and the relay device have moved out of the coverage area of the first cell, the terminal device and the relay device need to perform handover to another cell, i.e. a second cell. At this time, a connection relationship between the terminal device and the relay device remains unchanged, and both the relay device and the terminal device need to perform handover from the first cell to the second cell, i.e., to perform group handover.

S82, the relay device sends second indication information to the terminal device when the relay device meets any one of the handover conditions of the plurality of preset cells, where the second indication information indicates that the relay device starts to execute an operation of handover from the first cell to one of the plurality of preset cells.

Before the relay device performs the cell handover, the relay device sends the second indication information to the terminal device, to indicate to the terminal device that the relay device is about to perform the handover cell and disconnect from the first cell. After receiving the second indication information, the terminal device may stop communicating with the first cell through the relay device, and stop sending data to the first cell through the relay device.

S83, the relay device establishes a connection with a second cell, where the second cell is one of the preset cells and the relay device meets a handover condition of the second cell.

The second cell is one of the preset cells and the relay device meets the handover condition of the second cell. Then the relay device will perform handover from the first cell to the second cell. After the relay device starts to perform the cell handover, the relay device will disconnect from the first cell and try to establish a connection with the second cell.

Optionally, a way of the relay device acquiring the handover conditions of the plurality of preset cells from the first cell may be as follows:
the relay device acquires a radio resource control RRC message from the first cell, where the RRC message includes the handover conditions of the plurality of preset cells.

Optionally, the RRC message further includes configuration information of each of the plurality of preset cells; and a way of the relay device establishing the connection with the second cell may be as follows:
the relay device acquires configuration information of the second cell based on the RRC message;
the relay device establishes the connection with the second cell based on the configuration information of the second cell.

Optionally, the handover condition of the second cell is:
a signal strength between the relay device and the second cell is greater than or equal to a preset strength.

Optionally, after the relay device establishes the connection with the second cell, the relay device may send first indication information to the terminal device, where the first indication information indicates that the relay device establishes the connection with the second cell. After receiving the first indication information, the terminal device can learn that the relay device has performed the handover from the first cell to the second cell. The terminal may communicate with the second cell through the relay device based on the configuration information of the second cell in RRC cells.

Optionally, the first indication information includes an identifier of the second cell, and the terminal device learns from the identifier of the second cell that a target cell selected by the relay device is the second cell.

Optionally, after the terminal device receives the first indication information, the relay device may receive data from the terminal device and send the data to the second cell.

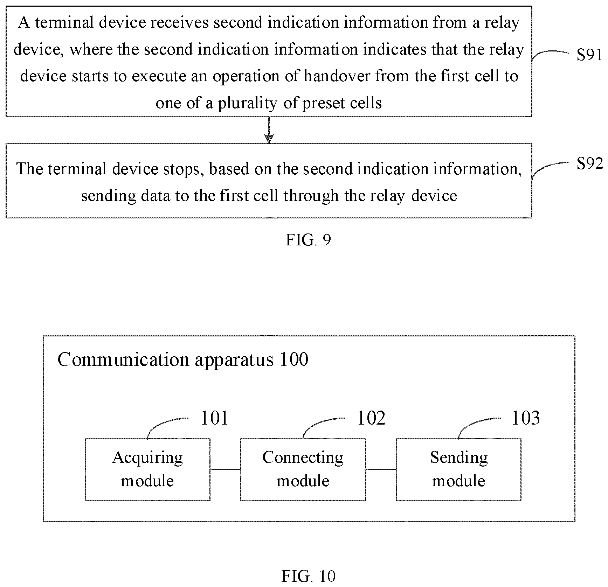

FIG. 9 is a schematic flow diagram of a communication method provided by another embodiment of the present application. As shown in FIG. 9, the following steps are included.

S91, a terminal device receives second indication information from a relay device, where the second indication information indicates that the relay device starts to execute an operation of handover from the first cell to one of a plurality of preset cells.

S92, the terminal device stops, based on the second indication information, sending data to the first cell through the relay device.

In a possible implementation, the method further includes that:
the terminal device receives first indication information from the relay device, where the first indication information indicates that the relay device performs handover from the first cell to a second cell and establishes a connection with the second cell, where the second cell is one of the plurality of preset cells;
the terminal device sends data to the second cell through the relay device based on the first indication information.

In a possible implementation, the first indication information includes an identifier of the second cell.

The solution of the embodiment shown in FIG. 9 is the method of the terminal device side corresponding to the solutions shown in FIG. 8. The steps and principles thereof have been introduced in the above embodiments. The specific implementation can be found in the above embodiments, and will not be repeated here.

According to the communication method and apparatus provided by the embodiments of the present application, firstly, the relay device acquires the handover conditions of a plurality of preset cells from the first cell, where for any cell i of the plurality of preset cells, the handover condition of the cell i is the handover condition for the relay device to perform handover from the first cell to the cell i; when the relay device meets the handover condition of the second cell, the relay device establishes the connection with the second cell, where the second cell is any one of the plurality of preset cells; finally, the relay device sends the first indication information to the terminal device to indicate that the relay device establishes the connection with the second cell. In the solution of the embodiments of the present application, after the relay device establishes the connection with the second cell, the relay device informs the terminal device through the first indication information that the connection with the second cell has been established, so that the terminal device can learn the timing of the completion of the handover of the relay device and know the target cell selected for the handover, thereby enabling the terminal device to interact with the second cell after the handover through the relay device. Further, before the relay device starts to perform the cell handover, the relay device can send the second indication information to the terminal device to indicate that the relay device is about to start the cell handover. The terminal device can stop communicating with the first cell through the relay device after receiving the second indication information, thereby saving signaling resources.

FIG. 10 is a schematic structural diagram of a communication apparatus provided by an embodiment of the present application. As shown in FIG. 10, the communication apparatus 100 includes an acquiring module 101, a connecting module 102 and a sending module 103, where:
the acquiring module 101 is configured to acquire handover conditions of a plurality of preset cells from a first cell, where for any cell i of the plurality of preset cells, a handover condition of the cell i is a handover condition for a relay device to perform handover from the first cell to the cell i;
the connecting module 102 is configured for the relay device to establish a connection with a second cell when the relay device meets a handover condition of the second cell, where the second cell is any one of the plurality of preset cells;
the sending module 103 is configured to send first indication information to a terminal device, where the first indication information indicates that the relay device establishes the connection with the second cell.

In a possible implementation, the first indication information includes an identifier of the second cell.

In a possible implementation, the acquiring module 101 is specifically configured to:
acquire a radio resource control RRC message from the first cell, where the RRC message includes the handover conditions of the plurality of preset cells.

In a possible implementation, the RRC message further includes configuration information of each of the plurality of preset cells; and the connecting module 102 is specifically configured to:
acquire configuration information of the second cell based on the RRC message;
establish the connection with the second cell based on the configuration information of the second cell.

In a possible implementation, the sending module 103 is further configured to, before the relay device establishes the connection with the second cell:
send second indication information to the terminal device, where the second indication information indicates that the relay device starts to execute an operation of handover from the first cell to one of the plurality of preset cells.

In a possible implementation, the handover condition of the second cell is:
a signal strength between the relay device and the second cell is greater than or equal to a preset strength.

In a possible implementation, the acquiring module 101 is further configured to:
receive data from the terminal device and send the data to the second cell.

The apparatus provided in the embodiment of the present application can be used to execute the technical solutions of the above method embodiments. The implementation principles and technical effects thereof are similar and will not be repeated here.

The communication apparatus shown in the embodiment of the present application may be a chip, a hardware module, a processor, etc. Certainly, the communication apparatus may be of other forms, which is not specifically limited by the embodiment of the present application.

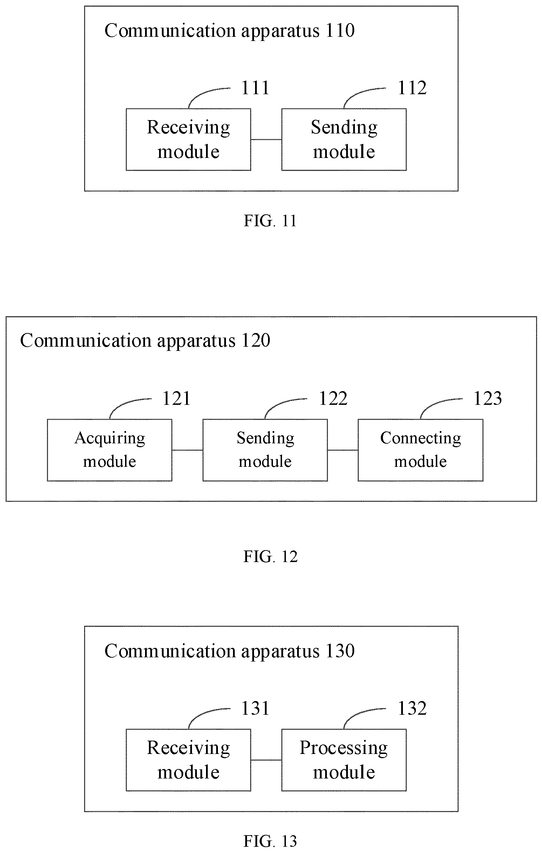

FIG. 11 is a schematic structural diagram of a communication apparatus provided by an embodiment of the present application. As shown in FIG. 11, the communication apparatus 110 includes a receiving module 111 and a sending module 112, where:
the receiving module 111 is configured to receive first indication information from a relay device, where the indication information indicates that the relay device performs handover from a first cell to a second cell and establishes a connection with the second cell;
the sending module 112 is configured to send data to the second cell through the relay device based on the first indication information.

In a possible implementation, the first indication information includes an identifier of the second cell.

In a possible implementation, the receiving module 111 is further configured to, before a terminal device receives the first indication information from the relay device:
receive second indication information from the relay device, where the second indication information indicates that the relay device starts to execute an operation of handover from the first cell to one of a plurality of preset cells, where the second cell is one of the plurality of preset cells.

The apparatus provided in the embodiment of the present application can be used to execute the technical solutions of the above method embodiments. The implementation principles and technical effects thereof are similar and will not be repeated here.

The communication apparatus shown in the embodiment of the present application may be a chip, a hardware module, a processor, etc. Certainly, the communication apparatus may be of other forms, which is not specifically limited by the embodiment of the present application.

FIG. 12 is a schematic structural diagram of a communication apparatus provided by an embodiment of the present application. As shown in FIG. 12, the communication apparatus 120 includes an acquiring module 121, a sending module 122 and a connecting module 123, where:
the acquiring module 121 is configured to acquire handover conditions of a plurality of preset cells from a first cell, where for any cell i of the plurality of preset cells, a handover condition of the cell i is a handover condition for a relay device to perform handover from the first cell to the cell i;
the sending module 122 is configured for the relay device to send second indication information to a terminal device when the relay device meets any one of the handover conditions of the plurality of preset cells, where the second indication information indicates that the relay device starts to execute an operation of handover from the first cell to one of the plurality of preset cells;
the connecting module 123 is configured to establish a connection with a second cell, where the second cell is one of the preset cells and the relay device meets a handover condition of the second cell.

In a possible implementation, the acquiring module 121 is specifically configured to:
acquire a radio resource control RRC message from the first cell, where the RRC message includes the handover conditions of the plurality of preset cells.

In a possible implementation, the RRC message further includes configuration information of each of the plurality of preset cells; and the connecting module 123 is specifically configured to:
acquire configuration information of the second cell based on the RRC message;
establish the connection with the second cell based on the configuration information of the second cell.

In a possible implementation, the handover condition of the second cell is:
a signal strength between the relay device and the second cell is greater than or equal to a preset strength.

In a possible implementation, the sending module 122 is further configured to, after the relay device establishes the connection with the second cell:
send first indication information to the terminal device, where the first indication information indicates that the relay device establishes the connection with the second cell.

In a possible implementation, the first indication information includes an identifier of the second cell.

In a possible implementation, the acquiring module 121 is further configured to:
receive data from the terminal device and send the data to the second cell.

The apparatus provided in the embodiment of the present application can be used to perform the technical solutions of the above method embodiments. The implementation principles and technical effects thereof are similar and will not be repeated here.

The communication apparatus shown in the embodiment of the present application may be a chip, a hardware module, a processor, etc. Certainly, the communication apparatus may be of other forms, which is not specifically limited by the embodiment of the present application.

FIG. 13 is a structural schematic diagram of a communication apparatus provided by an embodiment of the present application. As shown in FIG. 13, the communication apparatus 130 includes a receiving module 131 and a processing module 132, where:
the receiving module 131 is configured to receive second indication information from a relay device, where the second indication information indicates that the relay device starts to execute an operation of handover from the first cell to one of a plurality of preset cells;
the processing module 132 is configured to stop, based on the second indication information, sending data to the first cell through the relay device.

In a possible implementation, the receiving module 131 is further configured to:
receive first indication information from the relay device, where the first indication information indicates that the relay device performs handover from the first cell to a second cell and establishes a connection with the second cell, where the second cell is one of the plurality of preset cells;
send, by a terminal device, data to the second cell through the relay device based on the first indication information.

In a possible implementation, the first indication information includes an identifier of the second cell.

The apparatus provided in the embodiment of the present application can be used to perform the technical solutions of the above method embodiments. The implementation principles and technical effects thereof are similar and will not be repeated here.

The communication apparatus shown in the embodiment of the present application may be a chip, a hardware module, a processor, etc. Certainly, the communication apparatus may be of other forms, which is not specifically limited by the embodiment of the present application.

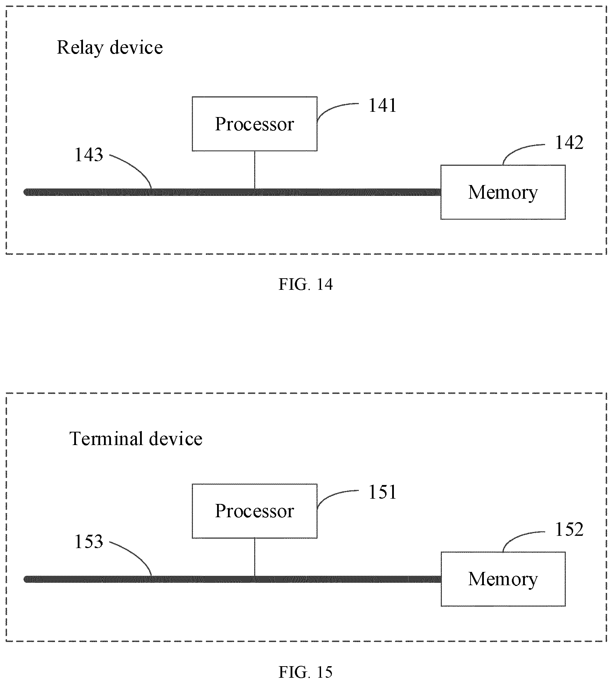

FIG. 14 is a schematic diagram of a hardware structure of a relay device provided by an embodiment of the present application. As shown in FIG. 14, the relay device includes: at least one processor 141 and a memory 142. The processor 141 and the memory 142 are connected via a bus 143.

Optionally, the model determination further includes a communication component. For example, the communication component may include a receiver and/or a transmitter.

In a specific implementation process, the at least one processor 141 executes computer-execution instructions stored in the memory 142 to cause the at least one processor 141 to execute the communication method as described above.

The specific implementation process of the processor 141 can be found in the method embodiments described above. The implementation principles and technical effects thereof are similar and will not be repeated here.

FIG. 15 is a schematic diagram of a hardware structure of a terminal device provided by an embodiment of the present application. As shown in FIG. 15, the terminal device includes: at least one processor 151 and a memory 152. The processor 151 and the memory 152 are connected via a bus 153.

Optionally, the model determination further includes a communication component. For example, the communication component may include a receiver and/or a transmitter.

In a specific implementation process, the at least one processor 151 executes computer-execution instructions stored in the memory 152 to cause the at least one processor 151 to execute the communication method as described above.

The specific implementation process of the processor 151 can be found in the method embodiments described above. The implementation principles and technical effects thereof are similar and will not be repeated here.

In the embodiments shown in FIG. 14 or FIG. 15 above, it should be understood that the processor may be a Central Processing Unit (English: Central Processing Unit, abbreviated: CPU), and may also be other general-purpose processor, a Digital Signal Processor (English: Digital Signal Processor, abbreviated: DSP), an Application Specific Integrated Circuit (English: Application Specific Integrated Circuit, abbreviated: ASIC), etc. The general-purpose processor may be a microprocessor or the processor may be any conventional processor, etc. The steps of the method disclosed in the present application may be directly embodied as being executed and completed by a hardware processor, or may be executed and completed by a combination of hardware and software modules in the processor.

The memory may include a high-speed RAM memory or a non-volatile memory NVM, such as at least one disk memory.

The bus may be an Industry Standard Architecture (Industry Standard Architecture, ISA) bus, a Peripheral Component (Peripheral Component, PCI) bus, or an extended industry standard architecture (Extended Industry Standard Architecture, EISA) bus, etc. The bus can be divided into an address bus, a data bus, a control bus, etc. For the convenience of representation, the buses in the accompany accompanying drawings of the present application are not limited to only one bus or one type of buses.

The present application also provides a computer-readable storage medium, where the computer-readable storage medium stores computer-execution instructions, and the communication method as described above is implemented when a processor executes the computer-execution instructions.

As for the above computer-readable storage medium, the above readable storage medium may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The readable storage medium may be any available medium that can be accessed by a general-purpose or special-purpose computer.

An exemplary readable storage medium is coupled to the processor so that the processor can read information from the readable storage medium and write information to the readable storage medium. Certainly, the readable-storage medium may also be an integral part of the processor. The processor and the readable storage medium may be located in application-specific integrated circuits (Application Specific Integrated Circuits, abbreviated: ASICs). Certainly, the processor and the readable storage medium may also exist in a device as discrete components.

The division of the units is only a logical function division, and there may be other division modes in actual implementation. For example, multiple units or components may be combined or integrated into another system, or some features may be ignored or not executed. On another point, the mutual coupling or direct coupling or communication connection shown or discussed may be indirect coupling or communication connection through some interface, apparatuses or units, which may be in electrical, mechanical or other forms.

The units described as separate components may or may not be physically separated, and the components shown as units may or may not be physical units, that is, they may be located in one place or may be distributed to a plurality of network units. Some or all of the units may be selected according to actual needs to achieve the purpose of the solution of the embodiments.

In addition, the functional units in the embodiments of the present application may be integrated into one processing unit, or each unit may exist alone physically, or two or more units may be integrated into one unit.

The functions described may be stored in a computer-readable storage medium if the functions are implemented in the form of software functional units and sold or used as an independent product. Based on this understanding, the essence of a technical solution of the present application, or the part that contributes to the prior art, or a part of the technical solution may be embodied in the form of a software product. The computer software product is stored in a storage medium and includes several instructions to cause a computer device (which may be a personal computer, a server, or a network device, etc.) to execute all or part of the steps of the methods described in various embodiments of the present application. The above storage medium includes: a USB drive, a removable hard disk, a Read-Only Memory (ROM, Read-Only Memory), a Random Access Memory (RAM, Random Access Memory), a magnetic disk or an optical disk, or other media that can store program codes.

Those of ordinary skill in the art can understand that all or some of the steps to implement the above method embodiments can be completed by hardware related to program instructions. The above program may be stored in a computer-readable storage medium. The steps including the above method embodiments are executed when the program is executed. The above storage medium includes a ROM, a RAM, a magnetic disk or an optical disk, or other media that can store program codes.

Finally, it should be noted that the above embodiments are only used to explain the technical solutions of the present application, rather than limiting them. Although the present application has been described in detail with reference to the above embodiments, those skilled in the art should understand that the technical solutions recorded in the above embodiments can still be modified, or some or all of the technical features thereof can be replaced equivalently. These modifications or replacements do not make the essence of the corresponding technical solutions depart from the scope of the technical solutions of the embodiments of the present application.

## Claims

1. A communication method, comprising:
acquiring, by a relay device, handover conditions of a plurality of preset cells from a first cell, wherein for any cell i of the plurality of preset cells, a handover condition of the cell i is a handover condition for the relay device to perform handover from the first cell to the cell i;
establishing, by the relay device, a connection with a second cell when the relay device meets a handover condition of the second cell, wherein the second cell is any one of the plurality of preset cells;
sending, by the relay device, first indication information to a terminal device, wherein the first indication information indicates that the relay device establishes the connection with the second cell.

2. The method according to claim 1, wherein the first indication information comprises an identifier of the second cell.

3. The method according to claim 1 or 2, wherein acquiring, by the relay device, the handover conditions of the plurality of preset cells from the first cell comprises:
acquiring, by the relay device, a radio resource control RRC message from the first cell, wherein the RRC message comprises the handover conditions of the plurality of preset cells.

4. The method according to claim 3, wherein the RRC message further comprises configuration information of each of the plurality of preset cells; and establishing, by the relay device, the connection with the second cell comprises:
acquiring, by the relay device, configuration information of the second cell based on the RRC message;
establishing, by the relay device, the connection with the second cell based on the configuration information of the second cell.

5. The method according to any one of claims 1 to 4, wherein before establishing, by the relay device, the connection with the second cell, the method further comprises:
sending, by the relay device, second indication information to the terminal device, wherein the second indication information indicates that the relay device starts to execute an operation of handover from the first cell to one of the plurality of preset cells.

6. The method according to any one of claims 1 to 5, wherein the handover condition of the second cell is:
a signal strength between the relay device and the second cell is greater than or equal to a preset strength.

7. The method according to any one of claims 1 to 6, further comprising:
receiving, by the relay device, data from the terminal device and sending the data to the second cell.

8. A communication method, comprising:
receiving, by a terminal device, first indication information from a relay device, wherein the first indication information indicates that the relay device performs handover from a first cell to a second cell and establishes a connection with the second cell;
sending, by the terminal device, data to the second cell through the relay device based on the first indication information.

9. The method according to claim 8, wherein the first indication information comprises an identifier of the second cell.

10. The method according to claim 8 or 9, wherein before receiving, by the terminal device, the first indication information from the relay device, the method further comprises:
receiving, by the terminal device, second indication information from the relay device, wherein the second indication information indicates that the relay device starts to execute an operation of handover from the first cell to one of a plurality of preset cells, wherein the second cell is one of the plurality of preset cells.

11. A communication apparatus, comprising:
an acquiring module, configured to acquire handover conditions of a plurality of preset cells from a first cell, wherein for any cell i of the plurality of preset cells, a handover condition of the cell i is a handover condition for a relay device to perform handover from the first cell to the cell i;
a connecting module, configured for the relay device to establish a connection with a second cell when the relay device meets a handover condition of the second cell, wherein the second cell is any one of the plurality of preset cells;
a sending module, configured to send first indication information to a terminal device, wherein the first indication information indicates that the relay device establishes the connection with the second cell.

12. A communication apparatus, comprising:
a receiving module, configured to receive first indication information from a relay device, wherein the indication information indicates that the relay device performs handover from a first cell to a second cell and establishes a connection with the second cell;
a sending module, configured to send data to the second cell through the relay device based on the first indication information.

13. A relay device, comprising: at least one processor and a memory;
wherein the memory stores computer-execution instructions;
the at least one processor executes the computer-executed instructions stored in the memory to cause the at least one processor to execute the communication method according to any one of claims 1 to 7.

14. A terminal device, comprising: at least one processor and a memory;
wherein the memory stores computer-execution instructions;
the at least one processor executes the computer- execution instructions stored in the memory to cause the at least one processor to execute the communication method according to any one of claims 8 to 10.

15. A computer-readable storage medium, wherein the computer-readable storage medium stores computer-execution instructions, and the communication method according to any one of claims 1 to 10 is implemented when a processor executes the computer-execution instructions.
